# FASCICULE DE BREVET EUROPEEN

(11) **EP 1 397 281 B1**
(45) Date de publication et mention de la délivrance du brevet: **01.12.2004**
(21) Numéro de dépôt: 02730395.7
(22) Date de dépôt: 06.05.2002
(51) Int. Cl.: B61L 3/14, B60M 3/00

(54) **SYSTEME DE TRANSPORT AUTOMATIQUE ET GUIDE DE PERSONNES ET PROCEDE DE COMMANDE DE MODULES DE TRANSPORT CIRCULANT DANS UN TEL SYSTEME**
AUTOMATISCHE TRANSPORT- UND PERSONENFÜHRUNGSANLAGE UND STEUERUNG VON TRANSPORTMODULEN IN EINER SOLCHEN ANLAGE
AUTOMATIC AND GUIDED SYSTEM FOR TRANSPORTING PEOPLE AND METHOD FOR CONTROLLING TRANSPORT MODULES RUNNING IN SUCH A SYSTEM

(30) Priorité: 31.05.2001 FR 0107161
(43) Date de publication de la demande: 17.03.2004
(73) Titulaire: ALSTOM, 92300 Levallois-Perret (FR); Régie Autonome des Transports Parisiens, 94684 Vincennes Cedex (FR)
(72) Inventeur: EHRSAM, Jean, F-92140 Clamart (FR); MOSKOWITZ, Jean-Paul, F-75013 Paris (FR); COTE, Anselme, F-91330 Yerres (FR)
(74) Mandataire: de Lambilly Delorme, Marie Pierre
(86) Numéro de dépôt international: PCT/FR2002/001549
(87) Numéro de publication internationale: WO 2002/096737

(56) Documents cités:
- US-A- 4 766 817

## Description

La présente invention concerne un système de transport automatique et guidé de personnes, conçu en sécurité intrinsèque et à régulation par l'alimentation en énergie électrique. L'invention concerne également un procédé de commande de modules de transport circulant dans un tel système.

Le document US 4,766,817 décrit un système et procédé de transport automatique.

Le transport automatique et guidé de personnes comprend des installations aussi différentes que l'ascenseur et le métro automatique. Le métro automatique est conçu pour se substituer aux lignes de métro classiques avec conducteurs. Une rame de métro automatique est destinée à transporter un nombre important de passagers sur une longueur de ligne relativement longue. Un métro automatique comporte habituellement des moteurs de traction dont l'alimentation électrique est assurée par l'intermédiaire d'un frotteur en contact avec un conducteur de courant qui est mis en permanence sous tension, tel un troisième rail courant sur toute la longueur de la ligne, chaque métro automatique embarquant un système de commande et de régulation agissant sur l'alimentation des moteurs de traction en fonction d'éléments de signalisation. Une telle installation de métro automatique présente l'inconvénient d'impliquer un matériel roulant et une infrastructure assez complexe et de nécessiter la présence d'un système de surveillance et de signalisation coûteux pour assurer la sécurité des installations et en particulier éviter les collisions entre les différentes rames de métro automatique circulant sur la même voie.

L'invention a été conçue pour permettre, avec un faible niveau d'investissement, de réaliser un système de transport automatique en combinant en un sous-système unique les fonctions habituellement réalisées par la signalisation, le pilotage et l'alimentation en énergie électrique. Pour cela, les véhicules automoteurs guidés sont munis de fonctions fixes embarquées qui sont actionnées en fonction de la présence ou de l'absence d'une tension sur un ou plusieurs conducteur(s) d'alimentation électrique au sol et en fonction de leur position en ligne.

L'invention a pour objet. un système de transport automatique et guidé de personnes, comprenant :
- au moins une voie de roulement comportant des moyens de guidage de modules de transport, chaque module de transport pouvant être constitué par un seul véhicule automoteur ou par un véhicule automoteur associé à un ou plusieurs autres véhicules de transport,
- un système d'alimentation électrique comprenant une suite de cantons d'alimentation,
- des modules de transport automoteurs électriques, circulant isolément sur la voie de roulement et équipés de moyens de captage de l'alimentation électrique fournie par les cantons d'alimentation, les modules de transport se déplaçant automatiquement sur la voie lorsque les moyens de captage sont alimentés électriquement et comportant des moyens de freinage se déclenchant lorsque les moyens de captage ne sont pas alimentés en énergie électrique,
- des moyens de distribution de l'alimentation électrique comprenant des moyens de commutation fournissant l'alimentation électrique aux différents cantons d'alimentation, les moyens de commutation étant commandés par un poste de commande centralisé qui gère la progression des modules de transport par la mise sous tension ou hors tension des différents cantons d'alimentation, la présence d'un module de transport sur un canton d'alimentation interdisant la mise sous tension d'un ou plusieurs cantons situé(s) derrière le canton occupé de manière à maintenir une distance de sécurité entre les différents modules de transport circulant isolément sur la voie.

De manière préférentielle, les modules de transport possèdent des paramètres de fonctionnement figés sous tension et à charge nominales, à savoir un démarrage selon une rampe déterminée à l'établissement du courant, un déplacement à vitesse de croisière contrôlée usant de moyens de traction et/ou de freinage en fonction de la vitesse atteinte, un ralentissement selon une rampe déterminée et un freinage selon une rampe déterminée à la coupure de courant.

Les modules de transport peuvent comporter des moyens contrôlant la rampe de démarrage, la vitesse de croisière, la rampe de rampe de ralentissement et la rampe de freinage de manière à assurer un fonctionnement du module selon les paramètres de fonctionnement figés indépendamment de la charge du module, des variations de la tension d'alimentation fournie par les moyens de captage et du profil de la voie.

Le système de transport peut comporter des stations d'embarquement/débarquement des personnes réparties le long de la voie.

Le système de transport peut comprendre des moyens détecteurs d'approche d'une station par un module de transport délivrant un signal à des moyens provoquant un ralentissement du module concerné jusqu'à une vitesse réduite ou jusqu'à l'arrêt à la station pour l'embarquement/débarquement de personnes. Le redémarrage du module de transport intervient automatiquement grâce à une commande temporisée de fermeture des portes qui enchaîne sur la commande de démarrage. Des sécurités de types portes d'ascenseurs autorisent cette commande de démarrage. Elles peuvent être complétées d'un détecteur d'objet engageant le gabarit en bout de quai.

Le système de transport peut comporter des moyens de détection pour détecter la présence d'un module de transport au niveau d'un canton d'alimentation.

Les moyens de détection de l'occupation d'un canton par un module peuvent être du type compteur d'essieux, détecteurs optiques, ou bien encore circuit de voie, ou réalisés par des moyens de traitement d'un signal codé porté par la liaison électrique module de transport - rail de courant.

Le système de transport peut comprendre une voie de roulement unique, éventuellement avec des voies d'évitement s'il y a des stations intermédiaires, chaque extrémité de la voie étant équipée d'un dispositif de retournement de module. Elle peut comprendre deux voies, des boucles reliant les extrémités correspondantes des voies. La voie de roulement peut être refermée sur elle-même pour constituer un anneau. Elle peut aussi comprendre deux voies reliées à chacune de leurs extrémités correspondantes par un système d'aiguillage ou un dispositif de retournement.

Avantageusement, les cantons d'alimentation sont formés de rails conducteurs montés sur un support isolant, les cantons d'alimentation étant isolés électriquement les uns des autres, les moyens de captage de l'alimentation électrique équipant les modules de transport étant des frotteurs disposés pour frotter sur les rails conducteurs des cantons d'alimentation.

Les moyens de freinage de chaque module de transport peuvent comprendre un frein mécanique à ressort.

Le système de transport peut comprendre en outre des moyens de retrait ou d'ajout de modules de transport sur la voie de roulement.

L'invention concerne également un procédé de commande de modules de transport automoteurs électriques circulant isolément sur une voie de roulement munie de moyens de guidage, chaque module de transport comportant des moyens de captage de l'alimentation électrique fournie par un système d'alimentation électrique comprenant une suite de cantons d'alimentation, caractérisé en ce que l'on commande la progression des modules de transport par la mise sous tension ou hors tension des différents cantons d'alimentation, les modules de transport se déplaçant automatiquement sur la voie lorsque les moyens de captage sont alimentés électriquement et comportant des moyens de freinage se déclenchant lorsque les moyens de captage ne sont plus alimentés électriquement.

Selon une autre caractéristique du procédé selon l'invention, la présence d'un module de transport sur un canton d'alimentation interdit la mise sous tension d'un ou plusieurs cantons situé(s) derrière le canton occupé de manière à maintenir une distance de sécurité entre les différents modules de transport circulant isolément sur la voie.

Selon encore une autre caractéristique du procédé selon l'invention, l'ensemble des cantons d'alimentation non occupés par un module de transport ne sont pas alimentés en énergie électrique et on commande la progression des véhicules par la mise sous tension de certains cantons d'alimentation.

Selon encore une autre caractéristique du procédé selon l'invention, on alimente par défaut les cantons d'alimentation en énergie électrique et on stoppe la progression des véhicules par la mise hors tension de certains cantons d'alimentation.

Selon encore une autre caractéristique du procédé selon l'invention, un poste de commande centralisé organise la circulation des modules de transport à partir des informations sur la position de chaque module de transport.

### BRÈVE DESCRIPTION DES DESSINS

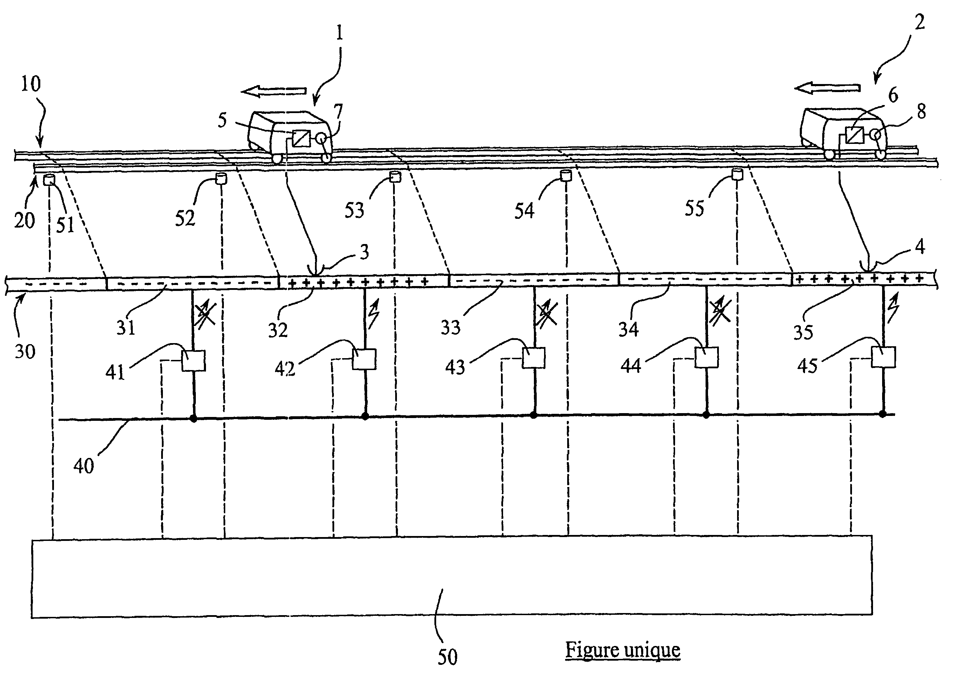

L'invention sera mieux comprise et d'autres avantages et particularités apparaîtront à la lecture de la description qui va suivre, donnée à titre d'exemple non limitatif, accompagnée du dessin annexé qui illustre de manière schématique le fonctionnement d'un mode de réalisation particulier d'un système de transport automatique et guidé de personnes selon l'invention.

### DESCRIPTION DETAILLEE D'UN MODE DE REALISATION DE L'INVENTION

Le système de transport comporte une installation comprenant des voies de roulement équipées d'un dispositif de guidage. Il peut s'agir de rails de roulement et de guidage. Il peut s'agir aussi de pistes de roulement associées à un dispositif de guidage distinct.

La figure annexée représente une partie d'une installation d'un système de transport selon l'invention où la voie de roulement est constituée de deux files de rails parallèles 10 et 20. Deux modules de transport constitués de simples véhicules 1 et 2 sont représentés.

L'installation comporte un système d'alimentation électrique par le sol 30 constitué d'une suite de cantons d'alimentation 31 à 35 pour la partie de l'installation représentée. Le système d'alimentation électrique par le sol 30 forme un troisième rail en communication électrique avec des frotteurs 3 et 4 correspondant respectivement aux véhicules 1 et 2. Les frotteurs 3 et 4 sont en communication électrique avec un dispositif d'alimentation embarqué, respectivement 5 et 6, d'un moteur d'entraînement, respectivement 7 et 8.

Ces dispositifs d'alimentation 5,6 embarqués gèrent le fonctionnement des moteurs d'entraînement 7,8 de manière à ce que les véhicules 1,2 démarrent selon une rampe déterminée à l'établissement du courant au niveau des frotteurs 3,4 et se déplacent à une vitesse de croisière donnée sous tension nominale. Chaque véhicule 1,2 comporte également un frein mécanique à ressort à commande électromécanique qui exerce son action lorsque le frotteur 3,4 n'est plus alimenté en énergie électrique et qui assure le freinage des véhicules 1,2 selon une rampe déterminée.

L'alimentation électrique au sol comprend une ligne d'alimentation 40 destinée à alimenter les différents cantons d'alimentation 31 à 35 via des moyens de commutation, respectivement 41 à 45, le retour se faisant par l'une des files de rails 10 ou 20. Les moyens de commutation 41 à 45 sont reliés à un poste de commande centralisé 50 gérant la mise sous tension et la mise hors tension de chacun des cantons d'alimentation 31-35.

L'installation comprend des moyens de détection 51-55 de la présence d'un véhicule 1,2 au niveau d'un canton d'alimentation 31-35. Ces moyens de détection 51-55 sont connus en soi et sont, par exemple, du type compteur d'essieux, détecteur optique ou constitués de moyens de traitement d'un signal codé porté par la liaison électrique module de transport - rail de courant.

Les moyens de détection 51-55 sont avantageusement disposés à la jonction entre deux cantons d'alimentation de manière à détecter le passage d'un véhicule 1,2 d'un canton d'alimentation à un autre.

Les moyens de détection 51-55 sont reliés au poste de commande centralisé 50, ce dernier comportant un calculateur qui analyse les signaux émis par les différents moyens de détection 51-55 de manière à en déduire la progression des différents véhicules 1,2 et la présence ou non d'un véhicule 1,2 au niveau d'un canton d'alimentation 31 à 35.

A partir de la connaissance de la position des véhicules 1,2 sur la voie de roulement, le poste de commande 50 centralisé gère la progression des véhicules 1,2, en envoyant des consignes aux moyens de commutation 41 à 45 pour alimenter les cantons d'alimentation au niveau desquels se trouvent les véhicules 1,2. Le poste de commande 50 assure simultanément le maintien d'une distance de sécurité entre les deux véhicules 1,2 en interdisant l'alimentation d'un ou plusieurs cantons d'alimentation situé(s) entre les différents cantons d'alimentation alimentés pour faire avancer respectivement les deux modules de transport 1 et 2.

Ainsi, dans l'exemple représenté à la figure annexée, pour faire avancer le véhicule 1 du canton d'alimentation 32 vers le canton d'alimentation 31, le poste de commande centralisé 50 envoie un signal au moyen de commutation 42 de manière à mettre sous tension le canton d'alimentation 32 provoquant ainsi le démarrage du véhicule suivant une rampe d'accélération donnée et contrôlée par le dispositif d'alimentation embarqué 5. Lors du franchissement du moyen détecteur 52 par le véhicule 1, un signal est envoyé au poste de commande centralisé 50 qui intervient alors sur les moyens de commutation 41 pour mettre sous tension le canton d'alimentation 31, le canton d'alimentation 32 étant successivement mis hors tension après une temporisation permettant d'assurer que le frotteur 3 est déjà rendu au contact du canton d'alimentation 31 lors de la coupure d'alimentation du canton 32. Simultanément à la mise hors tension du canton d'alimentation 32, le poste de commande centralisé 50 interdit que l'alimentation électrique de la ligne 40 ne soit fournie aux cantons d'alimentation 32 et 33. Il en résulte ainsi que le véhicule 2 abordant le canton d'alimentation 33 ne serait plus alimenté si le véhicule 1 se trouve toujours au niveau du tronçon d'alimentation 31 permettant ainsi d'assurer une distance de sécurité entre les différents véhicules 1 et 2. Bien entendu, le nombre de cantons d'alimentation neutralisés derrière un canton alimentant un véhicule est fonction de la longueur des cantons d'alimentation par rapport à la longueur du véhicule et sera d'autant plus important que la longueur des cantons d'alimentation est faible par rapport à la longueur du véhicule. De plus une protection supplémentaire des modules de transport peut être assurée en inhibant localement, par construction, au niveau des cantons d'alimentation tout ordre de mise sous tension d'un nombre adéquat de cantons d'alimentation disposés derrière un canton alimenté.

Pour identifier les zones d'embarquement et de débarquement de voyageur, l'installation peut comprendre un certain nombre de stations non représentées sur la figure annexée. Ces stations de voyageurs peuvent avantageusement être équipées de capteurs ou de balises détectant l'approche d'un véhicule et envoyant un signal au poste de commande centralisé 50 de manière à ce que l'alimentation du canton sur lequel se trouve le véhicule soit coupée et que le véhicule s'arrête devant la station.

Les stations peuvent être équipées de portes palières afin d'améliorer la sécurité du transport.

Les véhicules peuvent être programmés pour avoir une accélération, une vitesse de croisière et une décélération qui est fonction de la densité de véhicules circulant sur la voie de roulement. En fonction de la densité du trafic, plusieurs lois espace-temps de circulation des véhicules peuvent être sélectionnées.

Dans une variante de réalisation, le poste de commande centralisé 50 peut maintenir, à l'approche des stations, l'alimentation électrique des cantons alimentant les véhicules 1,2, le ralentissement ou l'arrêt des véhicules 1,2 devant les stations étant alors réalisé par le lancement d'une séquence de fonctionnement déterminée contenue dans les dispositifs d'alimentation 5,6 embarqués à bord des véhicules 1,2, et enclenchée par les capteurs ou balises situées sur la voie à proximité des stations.

L'installation selon la présente invention possède l'avantage de la simplicité et d'être d'un coût réduit (pas de conducteur), le poste de commande centralisé combinant les fonctions habituellement réalisées par la signalisation, le pilotage automatique et l'alimentation en énergie. Le système de transport selon l'invention permet donc une grande simplification de l'architecture d'un métro automatique.

De manière avantageuse, le transfert d'information entre le poste de commande centralisé 50 et les moyens de détection 51-55 est réalisé au moyen d'un réseau d'information de type bus, ce réseau d'information remontant également l'état d'alimentation des cantons d'alimentation 31 à 35 et pouvant servir de canal de commande des moyens de commutations 41 à 45.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans le mode de réalisation particulier représenté sur la figure, les véhicules possèdent une longueur inférieure à la longueur d'un canton d'alimentation. Toutefois, dans une variante de réalisation non représentée la longueur des cantons d'alimentation pourra également être inférieure à la longueur des véhicules.

## Revendications

1. Système de transport automatique et guidé de personnes, comprenant :
- au moins une voie de roulement comportant des moyens de guidage de modules de transport, chaque module de transport pouvant être constitué par un seul véhicule automoteur ou par un véhicule automoteur associé à un ou plusieurs autres véhicules de transport,
- un système d'alimentation électrique comprenant une suite de cantons d'alimentation (31 à 35),
- des modules de transport automoteurs électriques (1, 2), circulant isolément sur la voie de roulement et équipés de moyens de captage (3, 4) de l'alimentation électrique fournie par les cantons d'alimentation,
- des moyens de distribution de l'alimentation électrique comprenant des moyens de commutation (41 à 45) qui fournissent ladite alimentation électrique aux différents cantons d'alimentation (31 à 35) et qui sont commandés par un poste de commande centralisé (50) gérant la progression des modules de transport (1,2) par la mise sous tension ou hors tension des différents cantons d'alimentation (31 à 35), la présence d'un module de transport (1,2) sur un canton d'alimentation (31 à 35) interdisant la mise sous tension d'un ou plusieurs cantons situé(s) derrière le canton occupé de manière à maintenir une distance de sécurité entre les différents modules de transport (1, 2) circulant isolément sur la voie,
**caractérisé en ce que** lesdits modules de transport (1,2) sont munis de fonctions fixes embarquées contrôlant la rampe de démarrage, la vitesse de croisière, la rampe de ralentissement et la rampe de freinage du module de transport, lesdites fonctions fixes embarquée étant actionnées en fonction de la présence ou de l'absence d'une tension sur un ou plusieurs conducteur(s) d'alimentation électrique, lesdits modules de transport (1, 2) se déplaçant automatiquement sur la voie lorsque les moyens de captage (3, 4) sont alimentés électriquement et comportant des moyens de freinage se déclenchant lorsque les moyens de captage (3,4) ne sont pas alimentés en énergie électrique.

2. Système selon la revendication 1, **caractérisé en ce que** les modules de transport (1, 2) possèdent des paramètres de fonctionnement figés sous tension et à charge nominales, à savoir :
- un démarrage selon une rampe déterminée à l'établissement du courant,
- un déplacement à vitesse de croisière contrôlée, usant de, moyens de traction et/ou de freinage en fonction de la vitesse atteinte,
- un ralentissement selon une rampe déterminée,
- un freinage selon une rampe prédéterminée à la coupure de courant.

3. Système selon la revendication précédente, **caractérisé en ce que** les modules de transport (1, 2) comportent des moyens contrôlant la rampe de démarrage, la vitesse de croisière, la rampe de ralentissement et la rampe de freinage de manière à assurer un fonctionnement du module (1, 2) selon les paramètres de fonctionnement figés indépendamment de la charge du module (1, 2), des variations de la tension d'alimentation fournie par les moyens de captage(3,4), et du profil de la voie. ,

4. Système selon l'une quelconque des revendications 1 à 3, **caractérisé en ce qu'**il comporte des stations d'embarquement/débarquement des personnes réparties le long de la voie.

5. Système selon la revendication 4, **caractérisé en ce qu'**il comprend des moyens détecteurs d'approche d'une station par un module de transport (1, 2), délivrant un signal à des moyens provoquant un ralentissement du module concerné jusqu'à une vitesse réduite ou jusqu'à l'arrêt à la station pour l'embarquement/débarquement de personnes.

6. Système de selon l'une quelconque des revendications 1 à 5, **caractérisé en ce qu'**il comporte des moyens de détection pour détecter la présence d'un module de transport (1, 2) au niveau d'un canton d'alimentation.

7. Système selon la revendication 1, **caractérisé en ce qu'**il comprend une voie de roulement unique, chaque extrémité de la voie étant équipée d'un dispositif de retournement de module.

8. Système selon la revendication 1, **caractérisé en ce qu'**il comprend deux voies reliées à chaque extrémité par des moyens de retournement de module, des boucles reliant les extrémités correspondantes des voies.

9. Système selon la revendication 1, **caractérisée en ce que** les cantons d'alimentation (31 à 35) sont formés de rails conducteurs montés sur un support isolant, les cantons d'alimentation étant isolés électriquement les uns des autres, les moyens de captage (3, 4) de l'alimentation électrique équipant les modules de transport (1, 2) étant des frotteurs disposés pour frotter sur les rails conducteurs des cantons d'alimentation.

10. Système selon la revendication 1, **caractérisée en ce que** les moyens de freinage de chaque module de transport comprennent un frein mécanique à ressort.

11. Système selon la revendication 1, **caractérisée en ce qu'**elle comprend en outre des moyens de retrait ou d'ajout de modules de transport sur la voie de roulement.

12. Procédé de commande de modules de transport (1, 2) automoteurs électriques circulant isolément sur une voie de roulement muni de moyens de guidage, chaque module de transport (1, 2) comportant des moyens de captage (3, 4) de l'alimentation électrique fournie par un système d'alimentation comprenant une suite de cantons d'alimentation (31 à 35), **caractérisé en ce que** l'on commande la progression des modules de transport (1, 2) par la mise: sous tension ou hors tension des différents cantons (31 à 35), lesdits modules de transport (1, 2) étant munis de fonctions fixes embarquées contrôlant la rampe de démarrage, la vitesse de croisière, la rampe de ralentissement et la rampe de freinage du module de transport, lesdites fonctions embarquées étant actionnées en fonction de la présence ou de l'absence d'une tension sur le conducteur d'alimentation électrique, les modules de transport (1, 2) se déplaçant automatiquement sur la voie lorsque les moyens de captage (3, 4) sont alimentés électriquement et comportant des moyens de freinage se déclenchant lorsque les moyens de captage (3, 4) ne sont plus alimentés électriquement.

13. Procédé selon la revendication 12, **caractérisé en ce que** la présence d'un module de transport (1,2) sur un canton d'alimentation (31 à 35) interdit la mise sous tension d'un ou plusieurs cantons situé(s) derrière le canton occupé de manière à maintenir une distance de sécurité entre les différents modules de transport (1, 2) circulant isolément sur la voie.

14. Procédé selon l'une quelconque des revendications 12 à 13, **caractérisé en ce que** l'ensemble des cantons d'alimentation (31 à 35) non occupés par un module de transport (1, 2) ne sont pas alimentés en énergie électrique et **en ce qu'**on commande la progression des véhicules (1, 2) par la mise sous tension de certains cantons d'alimentation (31 à 35).

15. Procédé selon l'une quelconque des revendications 12 à 13, **caractérisé en ce que** par défaut les cantons d'alimentation (31 à 35) sont alimentés en énergie électrique et **en ce qu'**on stoppe la progression des véhicules (1, 2) par la mise hors tension de certains cantons d'alimentation (31 à 35).

16. Procédé selon l'une quelconque des revendications 12 à 15, **caractérisé en ce que** un poste de commande centralisé (50) organise la circulation des modules de transport (1, 2) à partir des informations sur la position de chaque module de transport (1, 2).

## Patentansprüche

1. Automatisches und geleitetes Transportsystem für Personen, welches aufweist:
- wenigstens ein Rollgleis, welches Führungsvorrichtungen für Transportmodule aufweist, wobei jedes Transportmodul aus einem einzigen selbstfahrenden Fahrzeug oder aus einem selbstfahrenden Fahrzeug, das mit einem oder mehreren anderen Transportfahrzeugen verbunden ist, gebildet sein kann,
- ein elektrisches Versorgungssystem, welches eine Folge von Versorgungskreisen (31 bis 35) aufweist,
- elektrische selbstfahrende Transportmodule (1, 2), welche getrennt voneinander auf dem Rollgleis verkehren und ausgestattet sind mit Vorrichtungen zur Aufnahme (3, 4) der elektrischen Versorgung, die von den Versorgungskreisen geliefert wird,
- Verteilvorrichtungen der elektrischen Versorgung, welche Umschaltvorrichtungen (41 bis 45) aufweisen, die die elektrische Versorgung an unterschiedliche Versorgungskreise (31 bis 35) liefern und die durch eine zentrale Steuerstelle (50) gesteuert werden, welche die Fortbewegung der Transportmodule (1, 2) leitet, indem unterschiedliche Versorgungskreise (31 bis 35) unter Spannung gesetzt werden oder spannungslos gesetzt werden, wobei die Gegenwart eines Transportmoduls (1, 2) auf einem Versorgungskreis (31 bis 35) das unter Spannung Setzen eines oder mehrerer Kreise, der/die direkt hinter dem belegten Kreis angeordnet sind, untersagt, um so einen Sicherheitsabstand zwischen den unterschiedlichen Transportmodulen (1, 2) aufrecht zu erhalten, die getrennt voneinander auf dem Gleis verkehren,
**dadurch gekennzeichnet, dass** die Transportmodule (1, 2) mit fixen an Bord befindlichen Funktionen ausgestattet sind, welche die Anlauframpe, die Fahrtgeschwindigkeit, die Abbremsrampe und die Bremsrampe des Transportmoduls kontrollieren, wobei die an Bord befindlichen fixen Funktionen betätigt werden abhängig von der Anwesenheit oder Abwesenheit einer Spannung auf einem oder mehreren Leitern der elektrischen Versorgung, wobei sich die Transportmodule (1, 2) automatisch auf dem Gleis fortbewegen, wenn die Aufnahmevorrichtungen (3, 4) elektrisch versorgt werden, und welche Bremsvorrichtungen aufweisen, die auslösen, wenn die Aufnahmevorrichtungen (3, 4) nicht mit elektrischer Energie versorgt werden.

2. System gemäß Anspruch 1, **dadurch gekennzeichnet, dass** die Transportmodule (1, 2) unveränderliche Betriebsparameter unter Spannung und bei Nennbelastung aufweisen, d. h:
- einen Anlaufvorgang gemäß einer Rampe, die zum Aufbauen des Stroms bestimmt ist,
- eine Fortbewegung mit kontrollierter Fahrtgeschwindigkeit unter Verwendung der Traktionsvorrichtungen und/oder der Bremsen entsprechend der zu erreichenden Geschwindigkeit,
- ein Abbremsen gemäß einer bestimmten Rampe,
- ein Bremsen gemäß einer Rampe, die zum Abtrennen des Stroms bestimmt ist.

3. System gemäß dem vorausgegangenen Anspruch, **dadurch gekennzeichnet, dass** die Transportmodule (1, 2) Vorrichtungen aufweisen, welche die Anlauframpe, die Fahrtgeschwindigkeit, die Abbremsrampe und die Bremsrampe kontrollieren, um einen Betrieb des Moduls gemäß den unveränderlichen Betriebsparametern sicherzustellen unabhängig von der Last des Moduls (1, 2), den Änderungen der von den Aufnahmevorrichtungen (3, 4) gelieferten Spannung und dem Profil des Gleises.

4. System gemäß irgend einem der Ansprüche 1 bis 3, **dadurch gekennzeichnet, dass** es Einstiegs-/ Ausstiegsstationen für Personen aufweist, die entlang des Gleises verteilt sind.

5. System gemäß Anspruch 4, **dadurch gekennzeichnet, dass** es Erkennungsvorrichtungen der Annäherung eines Transportmoduls (1, 2) an eine Station aufweist, welche ein Signal an die Vorrichtungen liefern, die eine Abbremsung des betroffenen Moduls bewirken bis zu einer reduzierten Geschwindigkeit oder bis zum Halt in der Station, um Personen ein-/ aussteigen zu lassen.

6. System gemäß irgend einem der Ansprüche 1 bis 5, **dadurch gekennzeichnet, dass** es Detektionsvorrichtungen aufweist, um die Gegenwart eines Transportmoduls (1, 2) auf Höhe eines Versorgungskreises zu erkennen.

7. System gemäß Anspruch 1, **dadurch gekennzeichnet, dass** es ein einzelnes Rollgleis aufweist, wobei jedes Gleisende mit einer Wendevorrichtung für das Modul ausgestattet ist.

8. System gemäß Anspruch 1, **dadurch gekennzeichnet, dass** es zwei Gleise aufweist, die an jedem Ende durch Wendevorrichtungen für das Modul verbunden sind, wobei Schleifen die entsprechenden Enden der Gleise verbinden.

9. System gemäß Anspruch 1, **dadurch gekennzeichnet, dass** die Versorgungskreise (31 bis 35) aus leitenden Schienen gebildet sind, die auf einem isolierenden Träger angebracht sind, wobei die Versorgungskreise voneinander elektrisch isoliert sind, die Aufnahmevorrichtungen (3, 4) zur elektrischen Versorgung, mit welchen die Transportmodule ausgestattet sind, Schleifstücke sind, die so angeordnet sind, dass sie auf den leitenden Schienen der Versorgungskreise schleifen.

10. System gemäß Anspruch 1, **dadurch gekennzeichnet, dass** die Bremsvorrichtungen jedes Transportmoduls eine mechanische Federbremse aufweisen.

11. System gemäß Anspruch 1, **dadurch gekennzeichnet, dass** es des weiteren Vorrichtungen zum Abnehmen oder Hinzufügen von Transportmodulen auf das Rollgleis aufweist.

12. Verfahren zur Steuerung von selbstfahrenden elektrischen Transportmodulen (1, 2), die getrennt voneinander auf einem Rollgleis verkehren, welches mit Leitvorrichtungen ausgestattet ist, wobei jedes Transportmodul (1, 2) Aufnahmevorrichtungen (3, 4) für die elektrische Versorgung aufweist, die über ein Versorgungssystem geliefert wird, das eine Folge von Versorgungskreisen (31 bis 35) aufweist, **dadurch gekennzeichnet, dass** die Fortbewegung der Transportmodule (1, 2) geleitet wird, indem unterschiedliche Versorgungskreise (31 bis 35) unter Spannung gesetzt werden oder spannungslos gesetzt werden, die Transportmodule (1, 2) mit fixen an Bord befindlichen Funktionen ausgestattet sind, welche die Anlauframpe, die Fahrtgeschwindigkeit, die Abbremsrampe und die Bremsrampe des Transportrnoduls kontrollieren, wobei die an Bord befindlichen Funktionen betätigt werden abhängig von der Anwesenheit oder Abwesenheit einer Spannung auf dem Leiter zur elektrischen Versorgung, wobei sich die Transportmodule (1, 2) automatisch auf dem Gleis fortbewegen, wenn die Aufnahmevorrichtungen (3, 4) elektrisch versorgt sind, und Bremsvorrichtungen aufweisen, die auslösen, wenn die Aufnahmevorrichtungen (3, 4) nicht mehr elektrisch versorgt werden.

13. Verfahren gemäß Anspruch 12, **dadurch gekennzeichnet, dass** die Anwesenheit eines Transportmoduls (1, 2) auf einem Versorgungskreis (31 bis 35) verbietet, dass ein oder mehrere hinter dem belegten Kreis angeordneten Kreise unter Spannung gesetzt werden, um einen Sicherheitsabstand zwischen den verschiedenen Transportmodulen (1, 2) aufrecht zu erhalten, die getrennt voneinander auf dem Gleis verkehren.

14. Verfahren gemäß irgend einem der Ansprüche 12 bis 13, **dadurch gekennzeichnet, dass** die Gesamtheit der Versorgungskreise (31 bis 35), die nicht durch ein Transportmodul (1, 2) belegt sind, nicht mit elektrischer Energie versorgt wird, und das Fortbewegen der Fahrzeuge (1, 2) gesteuert wird, indem bestimmte Versorgungskreise (31 bis 35) unter Spannung gesetzt werden.

15. Verfahren gemäß irgend einem der Ansprüche 12 bis 13, **dadurch gekennzeichnet, dass** die Versorgungskreise (31 bis 35) standardmäßig mit elektrischer Energie versorgt werden, und dadurch, dass das Fortbewegen der Fahrzeuge (1, 2) gestoppt wird, indem bestimmte Versorgungskreise (31 bis 35) spannungslos gesetzt werden.

16. Verfahren gemäß irgend einem der Ansprüche 12 bis 15 **dadurch gekennzeichnet, dass** eine zentrale Steuerstelle (50) den Verkehr der Transportmodule (1, 2) anhand von Informationen über die Position jedes Transportmoduls (1, 2) leitet.

## Claims

1. A system for automatic and guided transport of people, the system comprising:
· at least one running track having means for guiding transport modules, each transport module being constituted by a single self-propelled vehicle or a self-propelled vehicle associated with one or more other transport vehicles;
· an electric power supply system comprising a sequence of power supply blocks (31 to 35);
· electric self-propelled transport modules (1, 2) travelling individually along the running track and fitted with means (3, 4) for collecting electric power supplied by the power supply blocks; and
· electric power distribution means comprising switch means (41 to 45) which supply said electric power to the various power supply blocks (31 to 35) and which are controlled by a central control unit (50) managing the progress of the transport modules (1, 2) by causing the various power supply blocks (31 to 35) to be powered or unpowered, the presence of a transport module (1, 2) on a power supply block (31 to 35) preventing power being applied to one or more blocks situated behind the block that is occupied so as to maintain a safety distance between the various transport modules (1, 2) travelling independently along the track,
the system being **characterized in that** said transport modules (1, 2) are provided with fixed onboard functions controlling starting acceleration, cruising speed, and deceleration, both while slowing down and while braking, of the transport module, said fixed onboard functions being actuated as a function of the presence or absence of a voltage on one or more electric power supply conductors, said transport modules (1, 2) moving automatically along the track when the collector means (3, 4) are electrically powered, and including brake means that come into operation when the collector means (3, 4) are no longer powered with electricity.

2. A system according to claim 1, **characterized in that** the transport modules (1, 2) possess operating parameters that are fixed under nominal voltage and load, specifically:
· starting with determined acceleration when power is established;
· travelling at a controlled cruising speed using traction means and/or brake means as a function of the speed reached;
· slowing down with determined deceleration; and
· brbraking with predetermined deceleration when power is removed.

3. A system according to the preceding claim, **characterized in that** the transport modules (1, 2) include means for controlling starting acceleration, cruising speed, and deceleration both while slowing down and while braking so as to ensure that the module (1, 2) operates in application of operating parameters that are fixed, independently of the load of the module (1, 2), of variations in the power supplied by the collector means (3, 4), and of variations in the gradient profile of the track.

4. A system according to any one of claims 1 to 3, **characterized in that** it includes stations distributed along the track where passengers can board and alight.

5. A system according to claim 4, **characterized in that** it includes means for detecting when a transport module (1, 2) is approaching a station to deliver a signal to means for causing the module in question to slow down to a slow speed or until it has stopped at the station for allowing passengers to board and/or alight.

6. A system according to any one of claims 1 to 5, **characterized in that** it includes detector means for detecting the presence of a transport module (1, 2) in a power supply block.

7. A system according to claim 1, **characterized in that** it comprises a single running track, each end of the track being fitted with a device for turning a module around.

8. A system according to claim 1, **characterized in that** it comprises two tracks interconnected at each end by means for turning a module around, loops interconnecting the corresponding ends of the tracks.

9. A system according to claim 1, **characterized in that** the power supply blocks (31 to 35) are formed by conductor rails mounted on an insulating support, the power supply blocks being electrically insulated from one another, the electric power collector means (3, 4) fitted to the transport modules (1, 2) being collector shoes placed so as to rub along the conductor rails of the power supply blocks.

10. A system according to claim 1, **characterized in that** the brake means of each transport module comprise a spring-driven mechanical brake.

11. A system according to claim 1, **characterized in that** it further comprises means for withdrawing transport modules from the running track, or for adding modules thereto.

12. A method of controlling electric self-propelled transport modules (1, 2) travelling individually on a running track provided with guide means, each transport module (1, 2) having collector means (3, 4) for picking up electric power supplied by a power supply system comprising a sequence of power supply blocks (31 to 35), the method being **characterized in that** the progress of transport modules (1, 2) is controlled by powering or unpowering various blocks (31 to 35), said transport modules (1, 2) being provided with fixed onboard functions controlling starting acceleration, cruising speed, and deceleration, both while slowing down and while braking, of the transport module, said onboard functions being actuated as a function of the presence or absence of a voltage on the electric power supply conductor, the transport modules (1, 2) travelling automatically on the track whenever the collector means (3, 4) are electrically powered and including brake means which come into operation whenever the collector means (3, 4) are no longer electrically powered.

13. A method according to claim 12, **characterized in that** the presence of a transport module (1, 2) in a power supply block (31 to 35) prevents power being applied to one or more blocks behind the occupied block so as to maintain a safety distance between the various transport modules (1, 2) travelling individually on the track.

14. A method according to claim 12 or claim 13, **characterized in that** those power supply blocks (31 to 35) that are not occupied by a transport module (1, 2) are not supplied with electric power, and **in that** vehicle progression is controlled by feeding power to some of the power supply blocks (31 to 35).

15. A method according to claim 12 or claim 13, **characterized in that** by default the power supply blocks (31 to 35) are electrically powered, and **in that** the progress of the vehicles (1, 2) is stopped by removing power feed to certain power supply blocks (31 to 35).

16. A method according to any one of claims 12 to 15, **characterized in that** a centralized control unit (50) organizes travel of the transport modules (1, 2) on the basis of information concerning the position of each transport module (1, 2).
